(19) Europäisches Patentamt

European Patent Office

Office européen des brevets

(11) **EP 0 906 146 B1**

(12) **EUROPÄISCHE PATENTSCHRIFT**

(45) Veröffentlichungstag und Bekanntmachung des Hinweises auf die Patenterteilung:
**06.06.2001 Patentblatt 2001/23**

(21) Anmeldenummer: **97923097.6**

(22) Anmeldetag: **17.05.1997**

(51) Int Cl.$^7$: **B01D 53/70**, B01D 53/32

(86) Internationale Anmeldenummer:
**PCT/EP97/02538**

(87) Internationale Veröffentlichungsnummer:
**WO 97/45190 (04.12.1997 Gazette 1997/52)**

(54) **VERFAHREN ZUR ZERSTÖRUNG CHLORIERTER, AROMATISCHER VERBINDUNGEN**

PROCESS FOR DESTROYING CHLORINATED AROMATIC COMPOUNDS

PROCEDE DE DESTRUCTION DE COMPOSES AROMATIQUES CHLORES

(84) Benannte Vertragsstaaten:
**AT BE CH DE FR GB LI NL SE**

(30) Priorität: **28.05.1996 DE 19621339**

(43) Veröffentlichungstag der Anmeldung:
**07.04.1999 Patentblatt 1999/14**

(73) Patentinhaber: **Forschungszentrum Karlsruhe GmbH**
**76133 Karlsruhe (DE)**

(72) Erfinder:
• **PAUR, Hanns**
**D-76139 Karlsruhe (DE)**
• **MÄTZING, Hartmut**
**D-76344 Eggenstein-Leopoldshafen (DE)**
• **BAUMANN, Werner**
**D-76228 Karlsruhe (DE)**
• **FENGLER, Axel**
**D-35452 Heuchelheim (DE)**

(56) Entgegenhaltungen:
**EP-A- 0 416 631          WO-A-88/08325**
**DE-A- 4 001 305**

**Beschreibung**

Die Erfindung betrifft ein Verfahren zur Zerstörung chlorierter, aromatischer Verbindungen gemäß dem ersten Patentanspruch.

Bei einer Reihe von Hochtemperaturprozessen wie z. B. der Müllverbrennung, dem Schmelzen von Erz oder Metallschrott und dem Sintern werden polychlorierte aromatische Kohlenwasserstoffe wie z. B. Dibenzodioxine (PCDD), Dibenzofurane (PCDF), Biphenyle (PCB), Chlorphenole und Chlorbenzole gebildet und in die Atmosphäre emittiert, sofern keine Vorkehrung zu ihrer Rückhaltung getroffen werden. Die genannten polychlorierten aromatischen Kohlenwasserstoffe können sowohl gasförmig als auch partikelförmig vorliegen.

Gasförmige Chloraromaten können im Niedertemperaturbereich durch Adsorptionsverfahren aus dem Abgas abgetrennt werden. Bei diesen Verfahren werden allerdings die geringen Massenströme der abzuscheidenenden Chloraromaten auf große Mengen von Adsorbentien gebunden, die anschließend verbrannt oder untertägig gelagert werden müssen. Vorteilhafter wäre die unmittelbare Zerstörung der chlorierten Aromaten im Abgasstrom, so daß kein Sekundärabfall entsteht.

Aus der DE 38 41 858 C1 ist es bekannt, daß gasförmige Dioxine und Furane bei höheren Temperaturen oxidativ durch Einleiten von Wasserstoffperoxid in das Abgas zerstört werden können.

Weiterhin ist bekannt, daß das Abgas zur Zerstörung von verschiedenen Schadstoffen durch Bestrahlung mit Elektronen behandelt werden kann. Statt der Elektronenstrahlung sind auch eine Reihe von anderen Strahlen wie z. B. Ultraviolett, Mikrowellen und Gammastrahlen vorgeschlagen worden.

Wegen des meist unübersichtlichen Stoffspektrums in technischem Abgas werden durch eine solche Strahlung unübersichtliche und nicht vorhersehbare chemische Reaktionen eingeleitet. Welchen Effekt die Bestrahlung hat, hängt deshalb stark von der Zusammensetzung des Abgases ab. Es läßt sich nicht vorhersagen, ob ein bestimmter Schadstoff hierdurch zerstört wird oder nicht.

Eine weitere Schwierigkeit bei der Nutzung eines solchen Verfahrens besteht darin, daß sich bei höheren Temperaturen gasförmige PCDD und PCDF aus partikelgebundenem Kohlenstoff neu bilden können.

Die Neubildung kann ein solches Ausmaß erreichen, daß der erwartete Abbau überkompensiert wird.

Außer gasförmigen PCDD und PCDF können sich auch PCDD und PCDF enthaltende Aerosole bilden.

Wegen der stark unterschiedlichen Dampfdrücke der verschiedenen PCDD und PCDF kann die Neubildung in Aerosolen auch noch bei verhältnismäßig niedrigen Temperaturen stattfinden. Parikelgebundene PCDD und PCDF lassen sich jedoch durch Bestrahlen des Abgases mit den genannten Strahlungsarten nicht zerstören.

Aus der EP 0 416 631 A1 ist ein Verfahren zur Entfernung von Schadstoffen aus dem Abgas einer Müllverbrennungsanlage bekannt. Bei diesem Verfahren wird das Abgas bei 150° bis 300° C in einem Reaktor geleitet, im Reaktor ein Sprühnebel aus einem alkalischen Material erzeugt und gleichzeitig das Abgas im Reaktor vorzugsweise mit Elektronen-Strahlung bestrahlt. Mit diesem Verfahren sollen sich chlororganische Verbindungen zugleich mit anderen Schadstoffen zerstören lassen.

Das Verfahren sieht einen Staubabscheider nach dem Reaktor vor, der die Reaktionsprodukte des alkalischen Materials abtrennt.

Vor dem Reaktor ist jedoch kein Staubabscheider vorhanden, so daß alle im Abgas enthaltenen Partikel in den Reaktor gelangen. Unter diesen Umständen ist damit zu rechnen, daß sich PCDD und PCDF am Ausgang des Reaktors neu bilden, so daß keine effektive Gasreinigung erzielt wird. Ein hoher Anteil der Strahlungsleistung wird außerdem zur Umwandlung der Stickoxide und des Schwefeloxides verbraucht, so daß das Verfahren im Hinblick auf die organischen Chlorverbindungen ineffektiv wird.

Diese Nachteile sollen mit der Erfindung vermieden werden. Es sollen Maßnahmen vorgeschlagen werden, mit deren Hilfe die Strahlung nahezu ausschließlich die Zerstörung der chlorierten aromatischen Verbindungen bewirkt und die Neubildung dieser Verbindungen sowohl in Gasform als auch partikelgebunden effektiv vermindert wird.

Die Aufgabe wird durch das in Anspruch 1 beschriebene Verfahren gelöst. Die abhängigen Ansprüche geben bevorzugte Ausführungsformen des Verfahrens an.

Die Lösung der genannten Aufgabe besteht somit darin, die Verfahrensbedingungen so einzustellen, daß trotz der oben angegebenen, ungünstigen Verhältnisse ein weitgehender Abbau von Dioxinen und anderen chlorhaltigen aromatischen Verbindungen erfolgt. Der Abbau vollzieht sich hierbei durch OH-Radikale, die sich im bestrahlten Abgas aus dem praktisch in jedem Abgas vorhandenen Wasseranteil bilden.

Erfindungsgemäß muß das Abgas vorgereinigt werden, bevor die Zerstörung der chlorhaltigen aromatischen Verbindungen erfolgt.

Die Vorreinigung besteht in einer Entstaubung des Abgases bei einer Temperatur zwischen Raumtemperatur und 150° C bis auf einen Partikelgehalt von höchstens 30 bis 50 mg/m$^3$, wobei auch partikelförmige chlororganische Verbindungen entfernt werden. Außerdem muß Schwefeldioxid entweder durch eine Wäsche oder durch Sorption auf maximal 1000 mg/m$^3$, besser auf 500 mg/m$^3$, abgetrennt werden. Der Stickoxidgehalt darf 300 mg/m$^3$, besser 100 mg/m$^3$ nicht übersteigen. Die Stickoxid-Entfernung kann ebenfalls mit den bekannten Maßnahmen vorgenommen werden.

Versuche in einer Müllverbrennungsanlage haben gezeigt, daß Tetrachlordibenzodioxin in wasserdampfhaltiger Luft nach dem erfindungsgemäßen Verfahren zerstört wird. An sich reicht der Wasserdampfgehalt in den Abgasen der eingangs genannten Anlagen zur Durchführung des Verfahrens aus. Besonders bevorzugt wird jedoch eine solche Verfahrensführung, bei der eine der zuvor abzuscheidenden Komponenten Staub, Schwefeldioxid und Stickoxide durch einen Wäscher abgetrennt wird. Ein Wäscher liefert an seinem Ausgang in jedem Fall ein Reingas mit einer ausreichenden Feuchte.

Die Bestrahlung erfolgt erfindungsgemäß mit Elektronenstrahlung. Andere Strahlenarten sind entweder weniger effektiv (UV, Mikrowellen) oder in der praktischen Anwendung weniger geeignet (Gamma-Strahlung).

Beträgt der Dosisbereich etwa 15 kGy (10 kWh) je 1000 m$^3$ Abgas, so können die Grenzwerte der 17. BlmSchV von 0,1 ng TE/m$^3$ eingehalten werden.

Die Abbauprodukte wurden in einigen Fällen besonders eingehend untersucht. Bespielsweise liefert eine Mischung von gasförmigem Trichlorphenol und Tetrachlordibenzodioxin einfache alphatische Carbonsäuren, die wegen ihrer sehr geringen Konzentration gefahrlos an die Atmosphäre abgegeben werden können. Der Anteil der chlorhaltigen aromatischen Verbindungen in den Abgasen ist andererseits in aller Regel so gering, daß auch die entstehenden einfachen Chlorverbindungen bzw. elementares Chlor nicht eigens abgetrennt werden müssen. Auf eine nachfolgende Filterstufe kann daher verzichtet werden.

Die Vorteile des erfindungsgemäßen Verfahrens können wie folgt zusammengefaßt werden:

- die chlorhaltigen aromatischen Verbindungen werden zerstört, ohne daß Sekundärabfall entsteht;

- zusätzliche Chemikalien sind nicht erforderlich;

- das Verfahren erzeugt nahezu keinen Druckabfall und

- der Energieverbrauch und die Investitionskosten sind vergleichsweise gering.

Im folgenden wird die Erfindung anhand von Ausführungsbeispielen und Figuren näher erläutert.

Es zeigen:

Fig. 1 den Abbau von PCDD (offene Kreise) und PCDF (offene Quadrate und untere durchgezogene Linie) als Funktion der Bestrahlungsdosis und den Vergleich mit für PCDD berechneten Daten (obere durchgezogene Linie);

Fig. 2 Toxizitätsäquivalente (TE) sowie TE-Zerstörungsgrad als Funktion der Strahlungsdosis.

In der folgenden Tabelle ist die Zusammensetzung des Abgases, das der Elektronenbestrahlung zugeführt wird, angegeben. Bei dem Abgas handelt es sich um das Rauchgas einer Müllverbrennungsanlage.

Tabelle:

| Volumenstrom | 1000 - 1100 Nm$^3$/h |
|---|---|
| Temperatur | 95° C |
| Taupunktstemperatur | 65 - 70° C |
| Flugasche | 0,4 mg/Nm$^3$ |
| Wasser | 200 - 250 g/Nm$^3$ |
| Salzsäure | < 1 mg/Nm$^3$ |
| Flußsäure | < 0,5 mg/Nm$^3$ |
| Schwefeldioxid | 10 - 20 mg/Nm$^3$ |
| Stickoxide | 150 - 200 mg/Nm$^3$ |
| PCDD | Σ 50 ng/Nm$^3$ |
| PCDF | Σ 80 ng/Nm$^3$ |
| Quecksilber | < 50 µg/Nm$^3$ |

Die Bestrahlung dieses Gases erfolgt mit einem Elektronenbeschleuniger, dessen Dosisleistung zwischen 0 und 15 kGy variiert wurde.

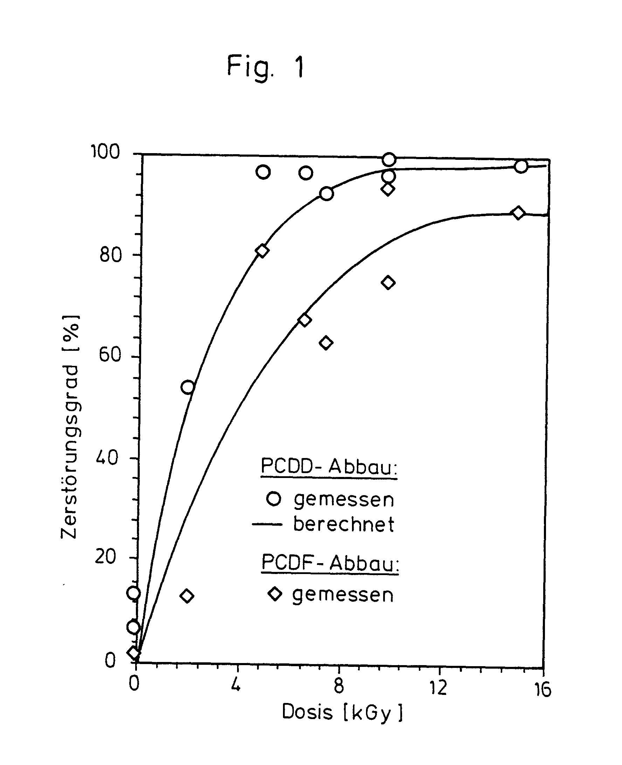

Wie aus Fig. 1 hervorgeht, erreicht man für PCDD und PCDF ab einer Bestrahlungsdosis von 12 kGy einen 90%-igen Abbau. Dabei wird für PCDD bereits bei 5 kGy ein Zerstörungsgrad von 95 % gemessen; erwartungsgemäß sind die PCDF jedoch stabiler gegenüber dem Angriff der OH-Radikale. Hier ist eine Dosis von 10 - 15 kGy notwendig, um einen 90%-igen Abbau zu erreichen.

Es zeigte sich, daß Chlorbenzole und Chlorphenole ebenfalls zu einem beträchtlichen Grad abgebaut werden.

Für Chlorphenole betragen die Abbaugrade bei 5 kGy 59 %, bei 10 % 84 - 88 % und bei 15 kGy 92 %. Chlorbenzole werden bei 10 kGy zu 43 % und bei 15 kGy zu 52 % abgebaut.

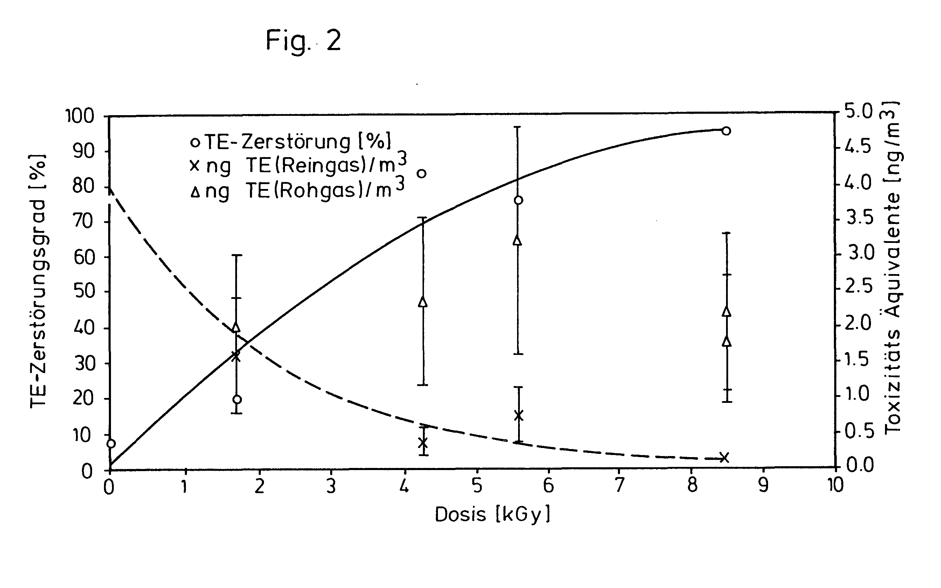

In Fig. 2 ist der Toxizitätsäquivalent-Zerstörungsgrad gegen die Dosis der Bestrahlung aufgetragen. Die Daten beruhen auf zwei Meßkampagnen.

Für die Auswertung der absolut abgebauten TE-Konzentrationen gilt

$$\triangle TE\ [ng/m^3] = 0,27\ Dosis[kGy]+0,4$$

Bei den derzeit typischen Emissionswerten von $2 \pm 0,5$ ng TE/m$^3$ an der Versuchsanlage ist eine Mindestdosis von $7 \pm 0,5$ ng TE/m$^3$ kGy zur Einhaltung des Grenzwertes der 17. BImSchV notwendig.

**Patentansprüche**

1. Verfahren zur Zerstörung chlorierter, aromatischer Verbindungen aus einem Abgas, das neben den chlorierten aromatischen Verbindungen Schwefeldioxid, Stickoxide und Stäube enthält, bei dem man

   a) bei einer Temperatur zwischen Raumtemperatur und 150° C
   b) das Abgas bis auf eine Reststaubmenge von maximal 50 mg/m$^3$ entstaubt,
   c) Schwefeldioxid bis auf eine Restkonzentration von maximal 1000 mg/m$^3$ und
   d) Stickoxide bis auf eine Restkonzentration von maximal 300 mg/m$^3$ entfernt, wonach man
   e) das Abgas einer Elektronenbestrahlung mit einer Energie von 3 bis 10 kWh/1000 m$^3$ Abgas unterzieht.

2. Verfahren nach Anspruch 1, bei dem die Reststaubmenge maximal 30 mg/m$^3$, die Restkonzentration von Schwefeldioxid maximal 500 mg/m$^3$ und die Restkonzentration der Stickoxide maximal 100 mg/m$^3$ betragen.

3. Verfahren nach Anspruch 1 oder 2 mit einem Abgas aus einer Müllverbrennungsanlage.

4. Verfahren nach Anspruch 1 oder 2 mit einem Abgas aus einer Metallschrott-Schmelzanlage.

5. Verfahren nach Anspruch 1 oder 2 mit einem Abgas aus einer Sinteranlage oder aus einem Hochofen.

**Claims**

1. Method of destroying chlorinated, aromatic compounds from an exhaust gas which contains sulphur dioxide, nitric oxides and dusts, in addition to the chlorinated aromatic compounds, wherein

   a) at a temperature between ambient temperature and 150° C
   b) the exhaust gas is relieved of dust up to a maximum residual dust quantity of 50 mg/m$^3$,
   c) sulphur dioxide is removed up to a maximum residual concentration of 1000 mg/m$^3$, and
   d) nitric oxides are removed up to a maximum residual concentration of 300 mg/m$^3$, whereupon
   e) the exhaust gas is subjected to an electron irradiation treatment with an energy of 3 to 10 kWh/1000 m$^3$ exhaust gas.

2. Method according to claim 1, wherein the maximum residual dust quantity is 30 mg/m$^3$, the maximum residual concentration of sulphur dioxide is 500 mg/m$^3$, and the maximum residual concentration of the nitric oxides is 100 mg/m$^3$.

3. Method according to claim 1 or 2 with an exhaust gas from a refuse incinerator.

4. Method according to claim 1 or 2 with an exhaust gas from a scrap metal smelting plant.

5. Method according to claim 1 or 2 with an exhaust gas from a sintering plant or from a blast furnace.

**Revendications**

1. Procédé de destruction de composés aromatiques chlorés à partir d'un gaz usé, qui contient, outre les composés aromatiques chlorés, de l'anhydride sulfurique, des oxydes d'azote et des poussières, dans lequel :

   a) on procède à une température comprise entre la température ambiante et 150°C,
   b) on dépoussière le gaz usé jusqu'à une quantité de poussière résiduelle de 50 mg/m$^3$ au maximum,
   c) on retire l'anhydride sulfurique jusqu'à une concentration résiduelle de 1000 mg/m$^3$ au maximum, et
   d) on retire les oxydes d'azote jusqu'à une concentration résiduelle de 300 mg/m$^3$ au maximum, après quoi
   e) on soumet le gaz usé à un bombardement d'électrons avec une énergie de 3 à 10 kwh/1000 m$^3$ de gaz usé.

2. Procédé selon la revendication 1,
   dans lequel la quantité de poussières résiduelles s'élève au maximum à 30 mg/m$^3$, la concentration résiduelle d'anhydride sulfurique s'élève au maximum à 500 mg/m$^3$ et la concentration résiduelle des oxydes d'azote s'élève au maximum à 100 mg/m$^3$.

3. Procédé selon la revendication 1 ou 2 avec un gaz usé provenant d'une installation de combustion des ordures.

4. Procédé selon la revendication 1 ou 2, avec un gaz usé provenant d'une installation de fusion de déchets métalliques.

5. Procédé selon la revendication 1 ou 2 avec un gaz usé provenant d'une installation de frittage ou d'un haut fourneau.

## Fig. 1

Fig. 2